# EUROPÄISCHE PATENTANMELDUNG

(11) **EP 3 269 858 A1**
(43) Veröffentlichungstag der Anmeldung: **17.01.2018**
(21) Anmeldenummer: 17179786.3
(22) Anmeldetag: 05.07.2017
(51) Int. Cl.: D04H 1/08, D04H 1/10, D04H 1/12, D04H 1/22, B29D 23/20, B32B 1/08

(54) **FILZ-VERPACKUNGSMATERIAL, INSBESONDERE FÜR KABELTROMMELN, UND VERFAHREN ZU DESSEN HERSTELLUNG**

(30) Priorität: 15.07.2016 DE 202016004412 U
(71) Anmelder: Knüppel Verpackung GmbH & Co. KG, 34346 Hann. Münden (DE)
(72) Erfinder: Rabasse, Kenneth, 34414 Warburg (DE)
(74) Vertreter: v. Bezold & Partner Patentanwälte - PartG mbB

(57) **Zusammenfassung**

Ein Verpackungsmaterial 100, umfassend eine Filzschicht 10 mit einer Faserzusammensetzung, enthält Füll-Fasern 1, die eine plastisch deformierbare Komponente der Filzschicht 10 bilden, optional Volumen-Fasern 2, die eine elastisch deformierbare Komponente der Filzschicht 10 bilden, und Verfestigungs-Fasern 3, die für eine thermoplastische Versteifung der Filzschicht 10 ausgelegt sind. Vorzugsweise trägt die Filzschicht 10 eine Folienschicht 20, die eventuelle Verletzungen 21 durch mechanische Einwirkungen leicht visuell erkennbar macht. Es werden auch Packgut, dessen Oberfläche mindestens teilweise mit dem Verpackungsmaterial 100 bedeckt ist, und Verfahren zur Herstellung des Verpackungsmaterials 100 beschrieben.

## Beschreibung

Die Erfindung betrifft ein Verpackungsmaterial, das aus Filz hergestellt ist, insbesondere eine Transportverpackung für Packgut, wie z. B. Kabeltrommeln, und/oder eine Schutzumhüllung für Bauteile. Gegenstände der Erfindung sind auch Packgut und/oder Bauteile, die teilweise oder vollständig mit dem Verpackungsmaterial umhüllt sind, und ein Verfahren zur Herstellung des Verpackungsmaterials. Anwendungen der Erfindung sind bei der Verpackung von Gegenständen zum Schutz bei einem Transport, insbesondere Versand oder betrieblicher Transport, oder bei einem Arbeitsprozess, insbesondere für Prallschutz- und/oder Schnittschutzzwecke gegeben.

Verpackungen besitzen eine wichtige Funktion beim maschinellen und insbesondere automatisierten Transport von Packgut. Bei der Produktion werden Bauteile innerbetrieblich oder zwischen verschiedenen Produktionsorten transportiert. Fertige Produkte werden an ihre Nutzer geliefert. Bei diesen Transportvorgängen, die maschinell und zunehmend automatisiert realisiert werden, muss das Packgut mit der Verpackung teilweise oder vollständig so umhüllt werden, dass beim Transport einerseits das Packgut nicht beschädigt wird und andererseits vom Packgut keine Gefahr für die Umwelt ausgeht. Die Erfüllung dieser Funktion stellt insbesondere bei der Schwergutverpackung von mechanisch empfindlichem Packgut eine Herausforderung dar.

Ein praktisches Beispiel stellt die Verpackung von Kabeltrommeln für einen Transport vom Hersteller zum Anwender, insbesondere zum Ort der Verlegung des Kabels, dar. Es ist allgemein bekannt, dass Kabeltrommeln für Stromversorgungskabel in der Vergangenheit mit einer Verpackung in Gestalt einer Holzverplankung versehen wurden. Holzverplankungen haben jedoch eine Reihe von Nachteilen, die sich insbesondere aus ihrem Gewicht, der Gefahr einer Beschädigung des Kabels beim Verpackungsvorgang und der Beeinträchtigung der Verpackungsfunktion schon bei kleinen Schäden an der Holzverplankung ergeben. Holzverplankungen sind daher für die Verpackung von Kabeltrommeln mit empfindlichen Kabeln, wie z. B. vieladrigen Kabeln für Bussysteme und/oder Lichtleiterkabeln nur eingeschränkt geeignet.

In der Praxis werden bisher biegsame Kunststoffplatten zur Verpackung von Kabeltrommeln mit empfindlichen Kabeln verwendet. Die Kunststoffplatten werden beispielsweise als Rollenware aus Polyethylen und Polypropylen mit einer Dicke von rund 2 bis 3 mm bereitgestellt. Zur Verpackung bedeckt eine Kunststoffplatte die Wicklung des Kabels zwischen den Ronden einer Kabeltrommel, wobei die Kunststoffplatte auf der Wicklung mit Spannbändern fixiert wird. Mit der Kunststoffplatte werden die Nachteile der Holzverplankung vermieden. Die Anwendung der Kunststoffplatten hat sich jedoch aufgrund der folgenden Probleme als nachteilig erwiesen.

Erstens zeichnen sich die Kunststoffplatten durch eine begrenzte mechanische Widerstandsfähigkeit aus. Sie können z. B. bei einem Transport der Kabeltrommel mit einem Gabelstapler durch eine lokale Einwirkung einer Transportgabel oder durch eine gegenseitige Eigengewicht-Einwirkung der Trommeln auf die Seitenronden brechen, so dass das Kabel freiliegt oder sogar beschädigt wird. Selbst wenn ein Bruch der Kunststoffplatte vermieden wird, kommt es bei der Einwirkung z. B. durch eine Transportgabel eines Gabelstaplers, zu einer lokal eng begrenzten Verformung der Kunststoffplatte, so dass das darunter liegende Kabel beschädigt werden kann. Ein weiterer Nachteil der Verpackung mit Kunststoffplatten besteht darin, dass kleine äußere Beschädigungen, obwohl sie eventuell zu einer Beschädigung des Kabels führen, nicht erkennbar sind. Beispielsweise kann sich ein Riss nach einer lokalen Einwirkung wieder schließen, ohne beim weiteren Transport oder beim Anwender sichtbar zu sein. Ein weiterer Nachteil der Verpackung mit Kunststoffplatten besteht darin, dass die Platten nicht stauchbar sind. Beim Auflegen der Kunststoffplatten auf der Wicklung entstehen in Abhängigkeit vom Durchmesser der Wicklung im Kunststoffmaterial verschieden starke mechanische Spannungen, welche die mechanische Stabilität der Verpackung beeinträchtigen können. Schließlich ergibt sich ein weiterer Nachteil der herkömmlichen Verpackung mit Kunststoffplatten aus deren relativ hohen Kosten und Gewicht, welches zwischen 1700 und bis ca. 3000 g/m² betragen kann. Um die Probleme hinsichtlich der Widerstandsfähigkeit und dem Auftreten von äußeren Beschädigungen zu mindern, könnten Kunststoffplatten mit einer größeren Dicke verwendet werden, wodurch jedoch das Gewicht, der Aufwand in der Handhabung und die Kosten der Verpackung weiter steigen würden.

Die genannten Probleme treten nicht nur bei der Verpackung von Kabeltrommeln, sondern auch bei der Verpackung von anderem Packgut, insbesondere bei Schwergut und/oder mechanisch empfindlichem Packgut und/oder beim Schutz von Bauteilen in Produktionsabläufen auf.

Es ist allgemein bekannt, dass Filz neben zahlreichen anderen Anwendungen auch für Verpackungszwecke genutzt wird. Filz-Verpackungen beschränken sich jedoch bisher auf den Kratzschutz empfindlicher Oberflächen, die Dämpfung von mechanischen Schwingungen beim Transport oder auf Schmuckverpackungen, z. B. für Geschenke. Des Weiteren zeichnen sich herkömmliche Filz-Verpackungen nachteilig dadurch aus, dass sie nach einer Deformation durch äußere mechanische Kräfte eine verringerte Dicke aufweisen, so dass sich ihre Schutzfunktion z. B. beim weiteren Transport verringert.

Die Aufgabe der Erfindung ist es, ein verbessertes Verpackungsmaterial bereitzustellen, mit dem Nachteile herkömmlicher Verpackungen überwunden werden und das sich insbesondere durch eine hohe mechanische Stabilität und Widerstandsfähigkeit, eine verbesserte Dämpfung mechanischer Einflüsse auf den verpackten Gegenstand, eine flexible Anwendbarkeit für verschiedene Verpackungsaufgaben, ein geringes Gewicht und/oder geringe Kosten auszeichnet. Die Aufgabe der Erfindung ist es des Weiteren, mit dem Verpackungsmaterial versehene Gegenstände, wie z. B. Packgut und/oder Bauteile bereitzustellen, mit denen Nachteile herkömmlicher Verpackungen vermieden werden, und ein Verfahren zur Herstellung des Verpackungsmaterials bereitzustellen.

Diese Aufgaben werden durch das Verpackungsmaterial, das Packgut und verpackte Bauteile sowie das Herstellungsverfahren mit den Merkmalen der unabhängigen Ansprüche gelöst. Vorteilhafte Ausführungsformen der Erfindung ergeben sich aus den abhängigen Ansprüchen.

Gemäß einem ersten allgemeinen Gesichtspunkt der Erfindung wird die genannte Aufgabe durch ein Verpackungsmaterial gelöst, das eine Filzschicht mit einer Faserzusammensetzung aus mehreren verschiedenen Fasern umfasst, die Füll-Fasern und Verfestigungs-Fasern enthält. Optional kann die Filzschicht zusätzlich Volumen-Fasern (oder: Bausch-Fasern) enthalten. Die Filzschicht ist ein textiles Flächengebilde aus ungeordneten Fasern, und insbesondere aus einer Nadelfilzschicht gebildet. Vorteilhafterweise kann die Filzschicht ausschließlich aus den Füll-Fasern, optional den Volumen-Fasern und den Verfestigungs-Fasern bestehen. Alternativ kann die Filzschicht weitere Komponenten, insbesondere Fasern, enthalten.

Die Füll-Fasern bilden eine plastisch deformierbare Komponente der Filzschicht. Die Filzschicht ist aufgrund des Anteils der Füll-Fasern in der Faserzusammensetzung plastisch deformierbar.

Die gemäß einer bevorzugten Ausführungsform der Erfindung zusätzlich vorgesehenen Volumen-Fasern bilden eine elastisch deformierbare Komponente der Filzschicht. Neben der plastischen Deformierbarkeit aufgrund der Füll-Fasern besitzt die Filzschicht durch den Anteil der Volumen-Fasern zusätzlich eine elastische Deformierbarkeit. Bei Anwendung mechanischer Kräfte stellt die Filzschicht eine elastische Dämpfung der Kräfte bereit. Die Filzschicht wird teilweise plastisch und teilweise elastisch deformiert, so dass nach dem Wegfall des mechanischen Drucks abweichend von herkömmlichen Filz-Verpackungen eine teilweise Rückstellung der Filzschicht in die ursprüngliche Form erfolgt. Bei einer Ausführungsform der Erfindung ohne die Volumen-Fasern kann die elastische Rückstellung durch die Verfestigungs-Fasern bereitgestellt werden.

Die Verfestigungs-Fasern in der Filzschicht sind für eine thermoplastische Versteifung der Filzschicht ausgelegt. Die Filzschicht erhält durch die Verfestigungs-Fasern eine zusätzliche plastische Deformierbarkeit, eine zusätzliche Strukturkomponente zur Erhöhung der Reißfestigkeit und die Fähigkeit, durch eine Energiezufuhr, insbesondere Erwärmung, lokal temporär erweicht oder verflüssigt zu werden und Füll-, Volumen- und verbleibende Verfestigungsfasern untereinander an diesen Stellen nach Abkühlung irreversibel zu verbinden und zu versteifen.

Das erfindungsgemäße Verpackungsmaterial bildet allgemein eine teilweise oder vollständige Umhüllung eines verpackten Gegenstands, beispielsweise für dessen Transport (Transportverpackung) oder einen Schutz des Gegenstands oder seiner Umgebung (Schutzverpackung).

Gegenüber herkömmlichen Verpackungen, insbesondere aus Holz oder Kunststoffplatten, hat das erfindungsgemäße Verpackungsmaterial zahlreiche Vorteile hinsichtlich eines verbesserten Schutzes des verpackten Gegenstands gegen mechanische Einwirkungen, eine erhöhte Widerstandsfähigkeit gegenüber lokalen, insbesondere punkt- oder linienförmigen mechanischen Einwirkungen, eines geringen Flächengewichts, der Fähigkeit zur einfachen Anpassung an eine konkrete Verpackungsaufgabe und verringerte Herstellungs- und Verpackungskosten. Durch die Zusammensetzung aus den Füll-, optional den Volumen- und den Verfestigungs-Fasern werden insbesondere ein hoher innerer Zerstörungswiderstand und damit eine erhöhte Reißfestigkeit des Verpackungsmaterials erzielt. Des Weiteren besitzt das erfindungsgemäße Verpackungsmaterial die Fähigkeit, mechanische Einwirkungen zu dämpfen, indem mechanische Kräfte im Gefüge der Filzschicht flächenhaft verteilt werden. Die verschiedenen Komponenten der Faserzusammensetzung sind zur Aufnahme von Verformungsenergie bei verschiedenen Arten der Einwirkung, wie z. B. kurzzeitige lokale Einwirkungen oder flächenhafte Dauereinwirkungen, angepasst, so dass mit dem Verpackungsmaterial ein optimaler Schutz während aller Phasen des Transports von Gegenständen oder der Benutzung von Bauteilen erzielt wird.

Vorzugsweise umfasst die Filzschicht eine Faserzusammensetzung aus synthetischen Textilfasern. Diese haben Vorteile in Bezug auf eine hohe Beständigkeit und die Fähigkeit, vorbestimmte plastische oder elastische Deformationseigenschaften basierend auf Fasereigenschaften, wie z. B. der Faserlänge, dem Faserdurchmesser, dem Fasermaterial und/oder dem Verfestigungsgrad im Nadelfilzprozess einzustellen. Besonders bevorzugt umfassen die Füll-Fasern Polyester-Fasern (PES-Fasern).

Als Volumen-Fasern haben sich als besonders vorteilhaft Recycling-Fasern (PCR-Fasern, PCR: Post Consumer Recyclate) erwiesen. Hierbei handelt es sich meist um sortenreine, gereinigte Konsumkunststoffe, die nach Zerkleinerung erneut in einem Extrusionsprozess zu Fasermaterial versponnen werden. Eine weitere Möglichkeit besteht in der Nutzung sogenannter Reißfasern, welche als Endprodukt der industriellen Aufarbeitung und Recyklierung textiler Abfälle erzeugt werden. Wenn die Volumen-Fasern einen Titer im Bereich von 2 dtex bis 5 dtex, besonders bevorzugt im Bereich von 3 dtex bis 4 dtex aufweisen, ergeben sich besondere Vorteile für die Dämpfung mechanischer Einwirkungen auf die Verpackung.

Die Verfestigungs-Fasern umfassen allgemein Fasern aus mindestens einem thermoplastischen Kunststoff, dessen Schmelzpunkt unterhalb der Schmelzpunkte der Füll- und Volumenfasern liegen, vorzugsweise Monofilament-Fasern und/oder Zweikomponenten-Fasern (Kern-Mantel-Filamente oder Biko-Fasern). Die Monofilament-Fasern umfassen z. B. PP und/oder PE. Die Zweikomponenten-Fasern weisen einen Kern aus Polyester und eine Hülle aus Acrylaten mit dem Schmelzpunkt unterhalb der Schmelzpunkte der Füll- und Volumenfasern auf. Der Mantel bildet ein schmelzbares Polymer, das bei Erwärmung eine Formung und eine Beibehaltung der eingestellten Form nach Abkühlung und Aushärtung des Gesamtfilz ermöglicht (thermische Aktivierung der Verfestigungs-Fasern). Die Zweikomponenten-Fasern haben im Vergleich zu Monofilament-Fasern den besonderen Vorteil, dass das thermoplastische Verhalten in der Filzschicht genauer einstellbar ist.

Die Verfestigungs-Fasern sind wenigstens in Teilbereichen der Filzschicht, vorzugsweise vollflächig in der Ausdehnung der Filzschicht, in einem thermoplastisch verformten Zustand (versteifter oder thermoplastisch aktivierter Zustand der Filzschicht) und/oder in einem thermoplastisch nicht-verformten Zustand (nicht-versteifter Zustand) der Filzschicht enthalten. Im thermoplastisch verformten Zustand kann der Filzschicht vorteilhafterweise eine vorbestimmte dreidimensionale Form aufgeprägt werden. Im thermoplastisch nicht-verformten Zustand tragen die Verfestigungs-Fasern zum Volumen und zur Rückstellbarkeit/elastischen Deformierbarkeit der Filmschicht bei.

Wenn alle Verfestigungs-Fasern gemäß der bevorzugten Variante in dem thermo-plastisch verformten Zustand sind und die Filzschicht flächig versteift ist, werden besondere Vorteile für die Dämpfung von mechanischen Stößen durch das Verpackungsmaterial erzielt. Das Verpackungsmaterial wird bei lokalen Stö-βen (kurzzeitige Einwirkungen, Schläge) komprimiert und die auftretenden Kräfte werden kompensiert (gepuffert) und in die Filzschicht abgeleitet. Nach dem Stoß zeichnet sich das Verpackungsmaterial durch eine elastische Rückstellung aus. Selbst im versteiften Zustand ist die Filzschicht noch genügend biegsam, um an die Oberfläche von zu verpackenden Gegenständen angepasst zu werden. Ein weiterer Vorteil besteht in der vereinfachten Bearbeitung der flächig versteiften Filzschicht, insbesondere beim vereinfachten Zuschnitt durch Sägen von Filzschicht-Rohmaterial im aufgerollten oder gestapelten Zustand. Das Sägen des Filzschicht-Rohmaterials, z. B. mit einer Band- oder einer Bügelsäge, liefert eine Säge-Schnittkante des Verpackungsmaterials, die vorzugsweise keine weitere Nachbearbeitung erfordert.

Die Verfestigungs-Fasern sind vorzugsweise für eine thermoplastische Verformung bei einer Temperatur ausgelegt, die niedriger als die Erweichungstemperatur der Füll- und der optional vorgesehenen Volumenfasern in der Filzschicht ist.

Vorteilhafterweise ist die im thermo-plastisch verformten Zustand der Verfestigungs-Fasern gebildete Steifigkeit des Verpackungsmaterials in Abhängigkeit von den Aktivierungsbedingungen (insbesondere Dauer, Temperatur und ggf. Druck bei der thermoplastischen Verformung) einstellbar. Die gewünschten Aktivierungsbedingungen sind in Abhängigkeit von den Eigenschaften der Verfestigungs-Fasern, z. B. durch Tests, wählbar. Die Verfestigungs-Fasern erlauben daher eine Anpassung des Verpackungsmaterials an die Anforderungen einer konkreten Verpackungsaufgabe.

Gemäß einer vorteilhaften Ausführungsform des erfindungsgemä-ßen Verpackungsmaterials können die Fasern der Faserzusammensetzung in der Filzschicht homogen verteilt sein. In diesem Fall umfasst die Filzschicht eine einzige Lage, welche die Füll-, die optionalen Volumen- und die Verfestigungs-Fasern in gleichmäßiger Verteilung enthält. Diese Ausführungsform der Erfindung kann Vorteile für die mechanische Widerstandsfähigkeit des Verpackungsmaterials haben.

Gemäß einer alternativen Ausführungsform des erfindungsgemä-βen Verpackungsmaterials kann die Faserschicht einen Stapel aus mindestens zwei Faserlagen umfassen, von denen eine erste Faserlage die Füll-Fasern und die Verfestigungs-Fasern und eine zweite Lage die Volumen-Fasern und die Verfestigungs-Fasern enthält. In der Filzschicht können mehr als zwei Faserlagen gestapelt sein, die jeweils die Füll- oder Volumen-Fasern und zusätzlich die Verfestigungs-Fasern enthalten. Die unterschiedlichen Faserlagen werden dem Vernadelungsprozess zugeführt und durch die Vernadelung miteinander kraftschlüssig verbunden. Der mehrlagige Aufbau der Filzschicht kann Vorteile für die Herstellung des Verpackungsmaterials und die gezielte Einstellung von plastischen und/oder elastischen Deformationseigenschaften haben. Die Verfestigungs-Fasern können in der einzelnen Filzschicht oder in den Faserlagen jeweils homogen oder inhomogen (z. B. mit einem Gradienten entlang der Schichtausdehnung oder senkrecht zu dieser) verteilt sein.

Vorteilhafterweise können sich die Volumenanteile der Füll-, Volumen- und Verfestigungsfasern in den einzelnen Faserlagen unterscheiden. Dies ermöglicht eine gezielte Anpassung der plastischen und/oder elastischen Deformationseigenschaften an eine konkrete Verpackungsaufgabe.

Ein weiterer Vorteil der Erfindung besteht in der Möglichkeit, die Deformationseigenschaften des Verpackungsmaterials durch die Volumenanteile der einzelnen Faserkomponenten einzustellen. Gemäß bevorzugten Ausführungsformen der Erfindung weisen in einem nicht-versteiften Zustand der Filzschicht, d.h. in einem Zustand, in dem die Verfestigungs-Fasern in einem thermoplastisch nicht-verformten Zustand sind, die Füll-Fasern einen Volumenanteil im Bereich von 30 % bis 80 %, insbesondere von 60 % bis 80 %, die Volumen-Fasern einen Volumenanteil im Bereich von 0 % (keine Volumen-Fasern) bis 50 %, z. B. von 3 % bis 50 %, insbesondere von 5 % bis 50 %, und die Verfestigungs-Fasern einen Volumenanteil im Bereich von 20 % bis 70 %, insbesondere von 20 % bis 40 % auf. Volumenanteile in den genannten Bereichen bieten besondere Vorteile für die Erhöhung der Widerstandsfähigkeit und Dämpfung und die Optimierung des Flächengewichts der Verpackung.

Ein weiterer besonderer Vorteil der Erfindung besteht darin, dass eine zuverlässige Verpackung bereits mit einer Filzschicht erzielt werden kann, deren Dicke geringer als 2 cm, insbesondere geringer als 1 cm ist. Vorzugsweise besitzt die Filzschicht eine Dicke von mindestens 2 mm, insbesondere mindestens 3 mm.

Ein weiterer Vorteil des erfindungsgemäßen Verpackungsmaterials besteht in dem relativ geringen Flächengewicht, was sich vorteilhaft auf die Herstellungs- und Verpackungskosten auswirkt. Vorzugsweise beträgt das Flächengewicht der Filzschicht höchstens 1000 g/m². Des Weiteren beträgt das Flächengewicht der Filzschicht vorzugsweise mindestens 300 g/m².

Weitere Vorteile des erfindungsgemäßen Verpackungsmaterials im Vergleich zu den herkömmlichen Kunststoffplatten bestehen darin, dass die Filzschicht gut manuell handhabbar ist. Das Verpackungsmaterial besitzt das relativ geringe Flächengewicht, so dass es gut greifbar und auf den zu verpackenden Gegenstand aufgebracht werden kann. Die bei den Kunststoffplatten mögliche Scharfkantigkeit der Ränder wird vermieden. Vor der Aufbringung der Verpackung kann das erfindungsgemäße Verpackungsmaterial leicht auf die gewünschte Form zugeschnitten werden.

Vorteilhafterweise ist das Verpackungsmaterial im nicht-versteiften Zustand der Filzschicht bereits gebrauchsfähig. Die verbesserten Verpackungseigenschaften werden bereits erzielt, wenn alle in der Filzschicht enthaltenen Verfestigungs-Fasern im thermoplastisch nicht-verformten Zustand sind.

Alternativ zu der o. g. flächigen Aktivierung der Verfestigungs-Fasern in der Filzschicht kann dies gemäß einer weiteren Ausführungsform der Erfindung Versteifungsabschnitte und Deformationsabschnitte aufweisen. In den Versteifungsabschnitten sind die Verfestigungs-Fasern oder deren Komponenten in dem thermoplastisch verformten Zustand (versteifter oder thermoplastisch aktivierter Zustand). Die Filzschicht ist lokal komprimiert und versteift. Die Deformierbarkeit der Versteifungsabschnitte ist geringer als die der Deformationsabschnitte. In den Deformationsabschnitten sind die Verfestigungs-Fasern in einem thermoplastisch nicht-verformten Zustand. Entsprechend ist die Filzschicht in den Deformationsabschnitten nicht-komprimiert und deformierbar. Die Bildung der Versteifungs- und Deformationsabschnitte (oder: Bildung einer Gravur oder eines Reliefs der Filzschicht) hat den Vorteil, dass der Filzschicht zusätzliche Funktionen in Bezug auf die Biegsamkeit, die Kraftverteilung und die mechanische Festigkeit der Verpackung verliehen werden.

Gemäß einer ersten Variante der Bildung der Filzschicht mit abschnittweise thermisch aktivierten Verfestigungs-Fasern ist ein flächenbezogenes Aspektverhältnis der Versteifungsabschnitte und der Deformationsabschnitte kleiner 1. Die Gesamtfläche der Versteifungsabschnitte ist geringer als die Gesamtfläche der Deformationsabschnitte. In diesem Fall ergibt sich eine skelettierte Verfestigung der Faserzusammensetzung entsprechend dem Verlauf der Versteifungsabschnitte. Vorteilhafterweise wird das Dämpfungsverhalten der erfindungsgemäßen Verpackung bei gleichzeitiger Erhaltung der Biegsamkeit, z. B. beim Anlegen an einen gekrümmten Gegenstand, verbessert.

Besonders bevorzugt umfassen die Versteifungsabschnitte gerade Versteifungslinien, zwischen denen die Deformationsabschnitte flächenhaft gebildet sind. Vorzugsweise erstrecken sich die Versteifungslinien entlang einer Hauptbiegerichtung der Filzschicht beim Verpackungsvorgang, z. B. in Umfangsrichtung beim Verpacken der Wicklung einer Kabeltrommel. Alternativ oder zusätzlich können sich die Versteifungslinien quer zu der Hauptbiegerichtung erstrecken, wobei sie vorteilhafterweise eine Gelenkfunktion beim Anlegen des Verpackungsmaterials auf der Oberfläche des zu verpackenden Gegenstandes erfüllen.

Die Erfindung ist jedoch nicht auf gerade Versteifungslinien beschränkt, sondern alternativ mit gekrümmten, insbesondere wellenförmigen Versteifungslinien realisierbar. In diesem Fall können sich zusätzliche Vorteile für die Biegesteifigkeit der Verpackung ergeben.

Gemäß einer zweiten Variante des Verpackungsmaterials mit abschnittweise thermisch aktivierten Verfestigungs-Fasern ist das flächenbezogene Aspektverhältnis der Versteifungsabschnitte und der Deformationsabschnitte größer als oder gleich 1. In diesem Fall ist die Gesamtfläche der Versteifungsabschnitte größer als die oder gleich der Gesamtfläche der Deformationsabschnitte. Vorteilhafterweise wird damit die Verteilung mechanischer Einwirkungen auf die Oberfläche des verpackten Gegenstands verbessert. Gleichzeitig erleichtern die Deformationsbereiche eine Biegsamkeit des Verpackungsmaterials und seine Anpassung an die äußere Form des zu verpackenden Gegenstands. Die Deformationsabschnitte bilden Sollknickstellen, die eine Verbiegung entlang der Hauptbiegerichtung des Verpackungsmaterials erleichtern

Die Deformationsabschnitte können bei dieser Variante der thermisch aktivierten Filzschicht gerade Biegelinien bilden, zwischen denen die Versteifungsabschnitte flächenhaft gebildet sind. Beispielsweise sind die Biegelinien quer zu der Hauptbiegerichtung der Filzschicht vorgesehen, so dass das Anlegen der Verpackung auf der Oberfläche des zu verpackenden Gegenstands verbessert wird.

Gemäß einer weiteren Variante der Erfindung können die Versteifungsabschnitte entlang der Ausdehnung der Filzschicht inselförmig gebildet sein. Die Versteifungsabschnitte sind allseits von Deformationsabschnitten umgeben. Diese Variante der Erfindung kann Vorteile in Bezug auf die Verbesserung der Biegesteifigkeit des Verpackungsmaterials haben. Gleichzeitig können die Versteifungsabschnitte mit einem charakteristischen Muster, z. B. zum Zweck der Wiedererkennung des Herstellens der Verpackung oder des verpackten Gegenstands verwendet werden.

Gemäß einer weiteren, besonders bevorzugten Ausführungsform der Erfindung ist die Filzschicht auf mindestens einer Oberfläche mit einer Folienschicht ausgestattet. Besonders bevorzugt weist die Filzschicht auf einer im verpackten Zustand eines Gegenstands nach außen weisenden Oberfläche die Folienschicht auf, während die gegenüberliegende, im verpackten Zustand innere Oberfläche ohne eine Folienschicht gebildet ist. Vorteilhafterweise werden mit der Folienschicht die Reißfestigkeit des Verpackungsmaterials und die Verteilung lokal wirkender Kräfte entlang der Flächenausdehnung des Verpackungsmaterials verbessert.

Wenn gemäß einer vorteilhaften Variante der Erfindung die Folienschicht und die Filzschicht visuell unterscheidbar sind, besonders bevorzugt verschiedene Farben aufweisen, erhält die Folienschicht eine Indikatorfunktion. Wenn die Folienschicht verletzt ist, kann das Auftreten einer mechanischen Einwirkung auf das Verpackungsmaterial unmittelbar durch visuelle Betrachtung erkannt werden. Des Weiteren kann die Folienschicht auf ihrer frei liegenden Seite Benutzungshinweise tragen.

Besonders bevorzugt enthält die Folienschicht mindestens ein Polyolefin hoher Dichte, wie z. B. PE-MD, PE-HD, oder Cast-PP, wobei die Folienschicht besonders bevorzugt eine Schichtdicke von mindestens 50 µm und/oder höchstens 200 µm aufweist.

Vorzugsweise ist die Folienschicht mittels einer Klebeschicht mit der Filzschicht verbunden. Vorteilhafterweise bietet die Klebeschicht eine zusätzliche Oberflächenverhärtung und damit einen erhöhten Schutz des Verpackungsmaterials gegen mechanische Einwirkungen. Alternativ kann die Folienschicht unmittelbar mit Verfestigungs-Fasern an der mindestens einen Oberfläche der Filzschicht verbunden sein. Vorteilhafterweise wird damit die Herstellung des Verpackungsmaterials vereinfacht und ein enger Verbund zwischen der Folienschicht und der Filzschicht erzielt. Der thermoplastische Kunststoff, mit dem die Verfestigungs-Fasern gebildet sind, erfüllt vorteilhafterweise eine Doppelfunktion: Erstens ermöglicht er die oben genannte thermische Aktivierung der Verfestigungs-Fasern, und zweitens ermöglicht er die flächenhafte Fixierung der Folienschicht.

Neben der Bereitstellung eines Indikators zur Anzeige von Verletzungen des Verpackungsmaterials durch mechanische Einwirkungen bildet die Folienschicht vorzugsweise eine Barriereschicht, die für einen Schutz gegen UV-Strahlung, Staub und/oder Flüssigkeiten, insbesondere Wasser, konfiguriert ist.

Gemäß einem zweiten allgemeinen Gesichtspunkt der Erfindung wird die oben genannte Aufgabe durch Packgut erfüllt, dessen Oberfläche teilweise oder vollständig von dem Verpackungsmaterial gemäß dem oben genannten ersten allgemeinen Gesichtspunkt der Erfindung bedeckt ist. Das Verpackungsmaterial bildet eine mindestens teilweise Umhüllung des Packguts. Vorteilhafterweise hat das mit dem Verpackungsmaterial versehene Packgut eine verminderte Empfindlichkeit gegen mechanische Einwirkungen, insbesondere während des Transports an einen Produktionsort und/oder zum Endabnehmer.

Allgemein umfasst das Packgut vorzugsweise Wickelgut auf einer Haspel oder Trommel, insbesondere mit einem Kabel, einer Kette, einem Seil oder einem Band, z. B. gebildet aus mindestens einem von Metall, Textilmaterial und Kunststoff. Gemäß einer besonders bevorzugten Ausführungsform der Erfindung umfasst das Packgut eine Kabeltrommel mit einer zwischen Ronden angeordneten Wicklung eines Kabels, wobei mindestens die Wicklung mit dem Verpackungsmaterial bedeckt ist. Das Verpackungsmaterial hat sich als hervorragender Schutz insbesondere für mechanisch empfindliche Spezialkabel, insbesondere Lichtleiterkabel, erwiesen.

Alternative Ausführungsformen des erfindungsgemäßen Packguts umfassen Haushaltsgeräte, Möbel, Baumaterial, insbesondere aus Holz, Mineralstoffen und/oder Glas, Coils aus Eisen, Stahl, Aluminium, Kupfer, Textilien, Glasfasern oder Karbonfasern, deren Spiegel und Mittelfläche mindestens teilweise mit dem Verpackungsmaterial bedeckt sind, einen zylindrischen Gegenstand, wie z. B. eine Stange, ein Mast, insbesondere Lichtmast, Leuchtsäule, eine Druckwalze, Walzen, insbesondere eine beschichtete oder oberflächenbehandelte, z. B. eloxierte Walze, Wellen, Hülsen, Profile, Coils oder Rohre, deren Oberfläche im Umfang und/oder an Enden im Stapel oder Einzeltransport gegen Anschlagen und/oder Abdruck mindestens teilweise mit dem Verpackungsmaterial bedeckt sind, und/oder Stapel oder Bündel von Walzen, Wellen, Hülsen, Coils oder Rohren, die das Verpackungsmaterial als Stapelzwischenlagen enthalten. Besondere Vorteile der Erfindung ergeben sich insbesondere bei der Verpackung von Rollen, Walzen, Wellen, Rohren oder Coils, deren Auflageflächen unregelmäßig oder drucksensitiv sind.

Gemäß einer alternativen Ausführungsform der Erfindung bildet das Verpackungsmaterial im Packgut eine Auflagepunktauskleidung, die für eine Dämmung oder Unterdrückung unerwünschter Schwingungen oder Resonanzen beim Transport ausgelegt ist. Des Weiteren kann das Verpackungsmaterial eine Unterlage zum Schutz gegen Druck oder Deformation bei der Verwendung von Haltebändern, z. B. aus Stahl, zur Umreifung des Packguts bilden.

Gemäß einem dritten Gesichtspunkt der Erfindung wird die genannte Aufgabe durch ein verpacktes Bauteil gebildet, bei dem das Verpackungsmaterial eine Schutzeinrichtung gegen mechanische Einwirkungen bildet. Das verpackte Bauteil ist z. B. Teil einer Schüttgutaufnahme, die für einen Herstellungs- oder Kommissionierungsprozess angepasst ist, wobei das erfindungsgemäße Verpackungsmaterial eine Prallschutzeinrichtung bildet. Alternativ kann das verpackte Bauteil ein Bündel scharfkantiger oder nicht entgrateter Bauteile umfassen, wobei das erfindungsgemäße Verpackungsmaterial eine Schnittschutzeinrichtung bildet.

Gemäß einem vierten Gesichtspunkt der Erfindung wird die genannte Aufgabe durch ein Verfahren zur Herstellung eines Verpackungsmaterials gemäß dem oben genannten ersten allgemeinen Gesichtspunkt der Erfindung gelöst. Das Verfahren umfasst die Herstellung der Filzschicht mit der erfindungsgemäßen Faserzusammensetzung, vorzugsweise als Rollenware. Dabei wird eines der an sich bekannten Verfahren zur Verfilzung von Fasern, wie z. B. Nadelfilzen angewendet.

Gemäß einer bevorzugten Ausführungsform des Verfahrens erfolgt anschließend eine Fixierung, z. B. ein Aufkleben und/oder eine Kaschierung, einer Folienschicht auf mindestens einer Oberfläche der Filzschicht. Hierzu wird vorzugsweise ein Warmschmelzverfahren angewendet, bei dem ein Klebstoffpulver auf die zueinander weisenden Oberflächen aufgebracht wird und eine Wärmebehandlung erfolgt, so dass die Filzschicht und die Folienschicht flächig miteinander verbunden werden. Alternativ kann, wie oben erwähnt ist, die Fixierung ohne den Klebstoff erfolgen, indem die Folienschicht durch Warmschmelzen unmittelbar mit den Verfestigungs-Fasern verbunden wird.

Anschließend, gleichzeitig mit oder vor der Fixierung der Folienschicht kann die bevorzugt vorgesehene flächige Aktivierung der Verfestigungs-Fasern oder alternativ die oben genannte Bildung von Versteifungs- und Deformationsabschnitten in der Filzschicht oder optional im Verbund aus Filz- und Folienschichten vorgesehen sein (so genannte Gravur des Verpackungsmaterials). Alternativ oder zusätzlich kann eine Perforation des Verpackungsmaterials entlang vorbestimmter Solltrennungslinien vorgesehen sein. Die Gravur erfolgt vorzugsweise mit einem Ultraschallschweißverfahren, bei dem der Verbund aus der Filzschicht und der Folienschicht zwischen einem Amboss und einer Sonotrode eines Ultraschallschweißgeräts angeordnet und mit Druck und Ultraschall beaufschlagt wird, um die Verfestigungsfasern thermisch zu aktivieren. Der Amboss besitzt ein Relief, das mit Vorsprüngen entsprechend der gewünschten Anordnung der Versteifungsabschnitte gebildet ist. Die Perforation kann ebenfalls mit dem Ultraschallschweißverfahren oder mit einem mechanischen Schnittwerkzeug erfolgen. Die thermische Aktivierung der Verfestigungs-Fasern erfolgt bei einer Temperatur, die niedriger als die Erweichungstemperatur der Füll- und Volumenfasern in der Filzschicht ist.

Vorteilhafterweise kann die Stärke der Verhärtung durch die thermische Aktivierung der Verfestigungs-Fasern durch Verfahrensparameter des Ultraschallschweißens eingestellt werden, welche den Anteil der Verfestigungs-Fasern und deren Temperatur bei der thermoplastischen Verfestigung beeinflussen.

Schließlich wird das Verpackungsmaterial in Abhängigkeit von der gewünschten Form des zu verpackenden Gegenstands zugeschnitten. Das Verpackungsmaterial wird als Rolle oder Stapel, z. B. Leporello-Stapel bereitgestellt, wobei das Verpackungsmaterial entlang der Hauptbiegerichtung, in der es bei der Verpackung gebogen wird, gekrümmt oder geknickt ist. Der Zuschnitt erfolgt vorzugsweise durch Sägen des Rohmaterials, insbesondere der Rolle oder des Stapels. Das Verpackungsmaterial kann dann am Ort der Anwendung auf die Oberfläche des zu verpackenden Gegenstands aufgebracht werden. Die Fixierung auf der Oberfläche, wobei das Verpackungsmaterial vorzugsweise flächig anliegt, erfolgt beispielsweise durch zusätzliche Haltebänder (Spannbänder).

Weitere Einzelheiten und Vorteile der Erfindung werden im Folgenden unter Bezug auf die beigefügten Zeichnungen beschrieben. Es zeigen:
- Figur 1:: eine schematische Draufsicht auf eine Filzschicht eines erfindungsgemäßen Verpackungsmaterials;
- Figur 2:: eine schematische Querschnittsansicht einer einlagigen Filzschicht eines erfindungsgemäßen Verpackungsmaterials;
- Figur 3:: eine schematische Querschnittsansicht einer mehrlagigen Filzschicht eines erfindungsgemäßen Verpackungsmaterials;
- Figuren 4A und 4B:: eine schematische Schnittansicht und eine schematische Draufsicht auf ein Verpackungsmaterial, bei dem die Filzschicht mit einer Folienschicht ausgestattet ist;
- Figuren 5A und 5B:: schematische Illustrationen der Bildung linienförmiger Versteifungsabschnitte;
- Figuren 6A und 6B:: schematische Illustrationen flächenhafter Versteifungsabschnitte; und
- Figur 7: eine schematische Perspektivansicht einer mit dem erfindungsgemäßen Verpackungsmaterial versehenen Kabeltrommel.

Ausführungsformen der Erfindung werden im Folgenden unter beispielhaftem Bezug auf ein Verpackungsmaterial beschrieben, das für die Verpackung von Kabeltrommeln konfiguriert ist. Es wird betont, dass die Anwendung der Erfindung nicht auf die Verpackung von Kabeltrommeln beschränkt, sondern mit anderen Transport- und/oder Schutzverpackungen möglich ist.

Des Weiteren wird betont, dass die Umsetzung der Erfindung nicht auf die konkret beschriebene Faserzusammensetzung, die Kombination einer Filzschicht und einer Folienschicht und die Bereitstellung von Versteifungs- und Deformationsabschnitten beschränkt ist. Vielmehr kann das Verpackungsmaterial eine einzige Filzschicht ohne eine Folienschicht umfassen, wobei die Verfestigungs-Fasern in einem thermoplastisch nicht-verformten Zustand oder abschnittsweise oder vollflächig in einem thermoplastisch verformten Zustand sind.

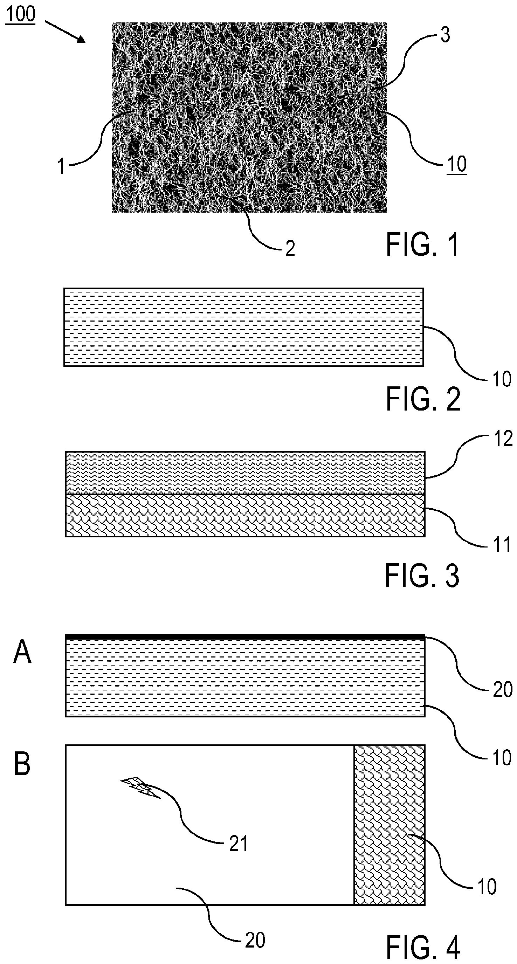

Figur 1 zeigt schematisch eine Draufsicht auf die Filzschicht 10 des erfindungsgemäßen Verpackungsmaterials 100 mit einer Dicke von z. B. 1 cm. Die Filzschicht 10 umfasst Füll-Fasern 1, optional vorgesehene Volumen-Fasern 2 und Verfestigungs-Fasern 3 (in Figur 1 nicht visuell unterscheidbar dargestellt). Die Füll-Fasern 1 bestehen z. B. aus PES mit einem Titer von z.B. 2,5 dtex. Die Volumen-Fasern 2 sind PCR-Fasern mit einem Titer von z. B. 4 dtex. Die Verfestigungs-Fasern 3 umfassen z. B. Acrylat/ PES-Biko-Fasern mit einem Titer von 3 dtex. Das Flächengewicht der Filzschicht 10 beträgt z. B. 600 g/cm². Die Füll-, Volumen- und Verfestigungs-Fasern können beispielsweise gemäß Figur 2 eine gemeinsame Filzschicht 10 bilden, in der alle Faserarten homogen verteilt angeordnet sind. Gemäß Figur 3 umfasst die Filzschicht 10 zwei Faserlagen 11, 12, von denen eine erste Faserlage 11 die Füll- und Verfestigungsfasern und die zweite Faserlage 12 die Volumen- und Verfestigungs-Fasern in homogener Verteilung enthält. Die Dicke der Faserlagen 11, 12 beträgt z. B. jeweils 0.5 cm.

Die Filzschicht 10 wird durch ein Nadelfilzverfahren z. B. als ein Rohmaterial-Band hergestellt. Die Breite des Bandes ist, insbesondere in Abhängigkeit von der Anwendung des Verpackungsmaterials, im Bereich von 10 cm bis 5 m gewählt und beträgt z. B. 2 m. Die thermische Aktivierung der Verfestigungs-Fasern erfolgt z. B. mit einer heizbaren Presse oder Walze oder einem Ultraschall-Schweißgerät. Das Rohmaterial-Band wird als Rolle, z. B. mit einem Durchmesser von 70 cm, aufgewickelt und anschließend als Rolle in Abhängigkeit von der gewünschten Größe des Verpackungsmaterials, z. B. mit einer Band- oder Bügelsäge, gesägt oder geschnitten.

Figur 4A illustriert in schematischer Querschnittsansicht eine Ausführungsform des erfindungsgemäßen Verpackungsmaterials 100, das einen Verbund aus der Filzschicht 10 und einer Folienschicht 20 umfasst. Die Filzschicht 10 ist beispielsweise aufgebaut, wie oben unter Bezug auf die Figuren 1 bis 3 beschrieben ist. Die Folienschicht 20 umfasst z. B. eine PE-HD Schicht mit einer Dicke von 125 µm. Besonders bevorzugt ist die Folienschicht 20 weiß oder mit einer Farbe versehen, so dass eventuelle Verletzungen 21 der Folienschicht 20 aufgrund des farblichen Kontrasts gegenüber der Filzschicht 10 leicht visuell erkennbar sind, wie in Figur 4B gezeigt ist.

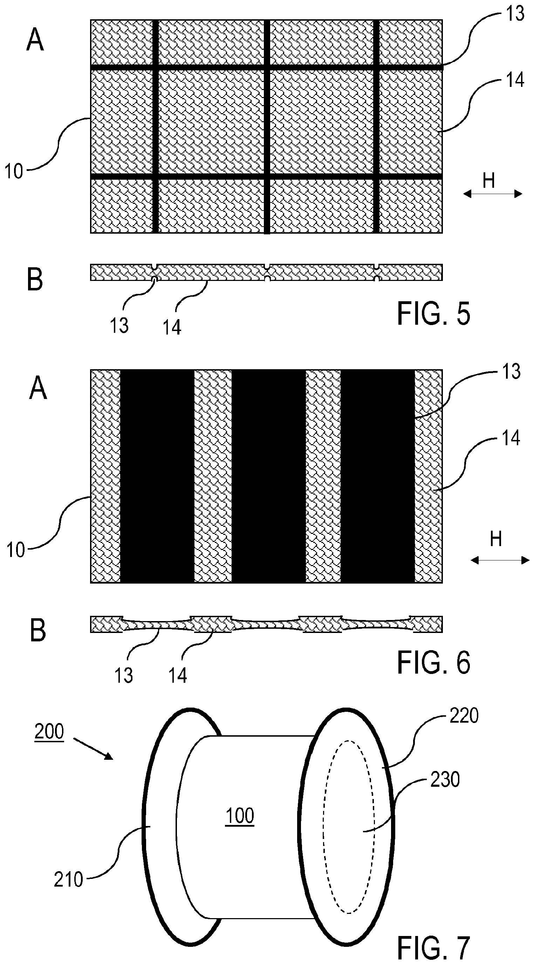

Die Figuren 5 und 6 zeigen Ausführungsformen des erfindungsgemäßen Verpackungsmaterials 100, bei dem in der Filzschicht 10 durch thermische Aktivierung der Verfestigungs-Fasern Versteifungsabschnitte 13 und Deformationsabschnitte 14 gebildet sind. Die Bildung der Versteifungs- und Deformationsabschnitte 13, 14 erfolgt mit dem oben genannten Ultraschallschweißverfahren.

Gemäß Figur 5 ist das flächenbezogene Aspektverhältnis der Versteifungsabschnitte 13 und der Deformationsabschnitte 14 kleiner als 1. Die Versteifungsabschnitte 13 umfassen lediglich Versteifungslinien, zwischen denen die Deformationsabschnitte 14 gebildet sind. Beispielhaft ist in der Draufsicht der Figur 5A eine Gitterform der Versteifungsabschnitte 13 gezeigt, bei der sich die Versteifungslinien längs und quer zu einer Hauptbiegerichtung H des Verpackungsmaterials 100 erstrecken.

Die Schnittansicht in Figur 5B zeigt schematisch, dass die Dicke der Filzschicht 10 im Bereich der Versteifungsabschnitte 13 durch die thermische Aktivierung und Verschmelzung der Verfestigungs-Fasern im Vergleich zur Dicke in den Deformationsabschnitten 14 verringert ist. Durch die Verfestigungsabschnitte 13 wird eine erhöhte Biegesteifigkeit des Verpackungsmaterials 100 erzielt.

Die Parameter der thermischen Aktivierung entlang bestimmter Linien können so gewählt werden, dass anstelle der Versteifungslinien Solltrennungslinien gebildet werden (Perforation des Verpackungsmaterials). Die Solltrennungslinien zeichnen sich durch eine Dicke der thermoplastisch deformierten Filzschicht derart aus, dass diese entlang der Solltrennungslinien manuell oder mit einer Schere unterbrochen werden kann.

Figur 6 zeigt eine alternative Variante des Verpackungsmaterials 100 in Draufsicht (Figur 6A) und Schnittansicht (Figur 6B), bei dem das flächenbezogene Aspektverhältnis der Versteifungsabschnitte 13 und der Deformationsabschnitte 14 grö-ßer als 1 ist. In diesem Fall ergibt sich eine erhebliche Verfestigung des Verpackungsmaterials. Zur Erhaltung der Biegsamkeit des Verpackungsmaterials 100 entlang der Hauptbiegerichtung H erstrecken sich in diesem Fall die Versteifungsabschnitte 13 lediglich quer zur Hauptbiegerichtung (Figur 6A). Entsprechend können die Deformationsbereiche 14 eine Scharnierfunktion erfüllen.

Figur 7 zeigt schematisch eine Kabeltrommel 200 mit zwei Ronden 210, 220, zwischen denen sich ein Trommelkörper 230 mit einer Kabelwicklung erstreckt. Auf der Oberfläche der Kabelwicklung ist das erfindungsgemäße Verpackungsmaterial 100 angeordnet und beispielsweise mit Spannbändern (nicht dargestellt) fixiert.

Die in der vorstehenden Beschreibung, den Zeichnungen und den Ansprüchen offenbarten Merkmale der Erfindung können sowohl einzeln als auch in Kombination oder in Unterkombination für die Verwirklichung der Erfindung in ihren verschiedenen Ausgestaltungen von Bedeutung sein.

## Patentansprüche

1. Verpackungsmaterial (100), umfassend eine Filzschicht (10) mit einer Faserzusammensetzung, die enthält:
- Füll-Fasern (1), die eine plastisch deformierbare Komponente der Filzschicht (10) bilden, und
- Verfestigungs-Fasern (3), die für eine thermoplastische Versteifung der Filzschicht (10) ausgelegt sind.

2. Verpackungsmaterial gemäß Anspruch 1, bei dem
- die Füll-Fasern (1) Polyester-Fasern umfassen.

3. Verpackungsmaterial gemäß einem der vorhergehenden Ansprüche, das enthält
- Volumen-Fasern (2), die eine elastisch deformierbare Komponente der Filzschicht (10) bilden.

4. Verpackungsmaterial gemäß Anspruch 3, das mindestens eines der Merkmale aufweist
- die Volumen-Fasern (2) weisen einen Volumenanteil im Bereich von 3% bis 50 %, insbesondere von 5 % bis 50 % auf,
- die Volumen-Fasern (2) umfassen PCR Recycling-Fasern und/oder Reißfasern, und
- die Volumen-Fasern (2) weisen einen Titer im Bereich 2 dtex bis 5 dtex auf.

5. Verpackungsmaterial gemäß einem der vorhergehenden Ansprüche, bei dem
- die Verfestigungs-Fasern (3) thermoplastische Fasern mit einem Schmelzpunkt umfassen, der niedriger als der Schmelzpunkt der Füll-Fasern (1) und niedriger als der Schmelzpunkt der Volumen-Fasern (2) ist, und
- die Verfestigungs-Fasern (3) Monofilament-Fasern, insbesondere aus Polypropylen oder Polyethylen, und/oder Zweikomponenten-Fasern, insbesondere Kern-Mantel-Filamente und/oder Biko-Fasern, umfassen.

6. Verpackungsmaterial gemäß einem der vorhergehenden Ansprüche, bei dem
- die Verfestigungs-Fasern (3) in einem thermo-plastisch verformten Zustand sind und die Filzschicht (10) flächig versteift ist.

7. Verpackungsmaterial gemäß einem der vorhergehenden Ansprüche, bei dem die Fasern der Faserzusammensetzung homogen in der Filzschicht (10) verteilt sind.

8. Verpackungsmaterial gemäß einem der vorhergehenden Ansprüche, bei dem in einem nicht-versteiften Zustand der Filzschicht (10), in dem die Verfestigungs-Fasern (3) in einem thermoplastisch nicht-verformten Zustand sind,
- die Füll-Fasern (1) einen Volumenanteil im Bereich von 30 % bis 80 % aufweisen, und
- die Verfestigungs-Fasern (3) einen Volumenanteil im Bereich von 20 % bis 70 % aufweisen.

9. Verpackungsmaterial gemäß einem der vorhergehenden Ansprüche, bei dem in einem nicht-versteiften Zustand der Filzschicht (10), in dem die Verfestigungs-Fasern (3) in einem thermoplastisch nicht-verformten Zustand sind,
- die Filzschicht (10) eine Dicke von mindestens 3 mm und/oder höchstens 10 mm aufweist und/oder ein Flächengewicht von mindestens 300 g/m² und/oder höchstens 1.000 g/m² aufweist.

10. Verpackungsmaterial gemäß einem der vorhergehenden Ansprüche, bei dem die Filzschicht (10) aufweist
- Versteifungsabschnitte (13), in denen die Verfestigungs-Fasern (3) in einem thermoplastisch verformten Zustand sind und die Filzschicht (10) komprimiert und versteift ist, und
- Deformationsabschnitte (14), in denen die Verfestigungs-Fasern (3) in einem thermoplastisch nicht-verformten Zustand sind und die Filzschicht (10) nicht-komprimiert und deformierbar ist.

11. Verpackungsmaterial gemäß Anspruch 10, bei dem
- die Versteifungsabschnitte (13) entlang der Ausdehnung der Filzschicht (10) inselförmig gebildet und allseits von den Deformationsabschnitten (14) umgeben sind.

12. Verpackungsmaterial gemäß einem der vorhergehenden Ansprüche, bei dem
- die Filzschicht (10) auf mindestens einer Oberfläche eine Folienschicht (20) aufweist.

13. Verpackungsmaterial gemäß Anspruch 12, mit mindestens einem der Merkmale
- die Folienschicht (20) und die Filzschicht (10) sind visuell unterscheidbar,
- die Folienschicht (20) und die Filzschicht (10) verschiedene Farben aufweisen,
- die Folienschicht (20) umfasst mindestens ein Polyolefin hoher Dichte,
- die Folienschicht (20) weist eine Schichtdicke von mindestens 50 µm und/oder höchstens 200 µm auf, und
- die Folienschicht (20) bildet eine Barriereschicht mit einem Schutz gegen UV-Strahlung, Staub und/oder Flüssigkeiten.

14. Verpackungsmaterial gemäß einem der Ansprüche 12 bis 13, bei dem
- die Folienschicht (20) auf die mindestens eine Oberfläche der Filzschicht (10) aufgeklebt ist.

15. Verpackungsmaterial gemäß Anspruch 14, bei dem
- die Folienschicht (20) mit Verfestigungs-Fasern (3) an der mindestens einen Oberfläche der Filzschicht (10) direkt verbunden ist.

16. Packgut (200), dessen Oberfläche mindestens teilweise mit dem Verpackungsmaterial (100) gemäß einem der vorhergehenden Ansprüche bedeckt ist, wobei das Verpackungsmaterial (100) eine mindestens teilweise Umhüllung des Packguts (200) bildet.

17. Packgut gemäß Anspruch 16, das umfasst
- eine Kabeltrommel (200) mit zwei Ronden (210) und einem Kabel, das zwischen den Ronden (210) eine Wicklung bildet, die mit dem Verpackungsmaterial (100) bedeckt ist,
- Wickelgut auf einer Haspel oder Trommel, insbesondere mit einem Kabel, einer Kette, einem Seil oder einem Band,
- ein Coil aus Eisen, Stahl, Aluminium, Kupfer, Textilien, Papier, Glasfasern, oder Karbonfasern, deren Spiegel und/oder Wickelfläche mindestens teilweise mit dem Verpackungsmaterial bedeckt ist,
- einen zylindrischen Gegenstand, wie z. B. eine Stange, ein Mast, insbesondere Lichtmast, Leuchtsäule, eine Druckwalze,
- eine Walze, insbesondere eine beschichtete oder oberflächenbehandelte, z. B. eloxierte Walze, eine Welle, eine Hülse, ein Coil, oder ein Rohr, deren Oberfläche im Umfang und/oder Enden im Stapel oder Einzeltransport gegen Anschlagen und Abdruck mindestens teilweise mit dem Verpackungsmaterial bedeckt ist, und/oder
- einen Stapel oder ein Bündel von Walzen, Wellen, Hülsen, Coils, Masten, Stangen, Profilen oder Rohren, der das Verpackungsmaterial als Stapelzwischenlage enthält.

18. Verfahren zur Herstellung eines Verpackungsmaterial gemäß einem der Ansprüche 1 bis 15, umfassend
- eine Herstellung der Filzschicht mit einem Verfahren zur Verfilzung von Fasern.

19. Verfahren gemäß Anspruch 18, umfassend den Schritt
- Fixierung einer Folienschicht auf mindestens einer Oberfläche der Filzschicht, insbesondere durch Warmschmelzen mit einem Klebstoff oder den Verfestigungs-Fasern.

20. Verfahren gemäß Anspruch 18 oder 19, umfassend den Schritt
- thermische Aktivierung der Verfestigungs-Fasern bei einer Temperatur, die niedriger als die Erweichungstemperatur der übrigen Fasern in der Filzschicht ist.

21. Verfahren gemäß einem der Ansprüche 18 bis 20, umfassend die Schritte
- Bereitstellung des Verpackungsmaterial als Rolle oder Stapel, und
- Zuschnitt des Verpackungsmaterials, insbesondere durch Sägen.
